# EUROPEAN PATENT SPECIFICATION

(11) **EP 3 567 701 B1**
(45) Date of publication and mention of the grant of the patent: **01.02.2023**
(21) Application number: 18171386.8
(22) Date of filing: 09.05.2018
(51) Int. Cl.: H02K 1/278, H02K 1/2786, H02K 7/18

(54) **MAGNET MODULE FOR A PERMANENT MAGNET MACHINE**
MAGNETMODUL FÜR EINE DAUERMAGNETMASCHINE
MODULE D'AIMANT POUR MACHINE À AIMANT PERMANENT

(43) Date of publication of application: 13.11.2019
(73) Proprietor: Siemens Gamesa Renewable Energy A/S, 7330 Brande (DK)
(72) Inventor: Azar, Ziad, Sheffield, S10 4ED (GB); Duke, Alexander, Sheffield, S6 5AG (GB); Groendahl, Erik, 8653 Them (DK); Soerensen, Peter Hessellund, 8740 Brædstrup (DK); Thomas, Arwyn, Cheshire, SK8 6HW (GB); Thougaard, Hans-Joergen, 8600 Silkeborg (DK); Urda, Adriana Cristina, 2300 København S (DK)
(74) Representative: SGRE-Association

(56) References cited:
- EP-A1- 2 348 612
- EP-A1- 2 555 385
- EP-A1- 2 600 497
- EP-A1- 3 179 605
- EP-A2- 1 777 795
- WO-A1-02/103882
- WO-A1-2009/068736
- WO-A2-2011/089040
- WO-A2-2016/066714
- DE-A1- 4 105 352
- JP-A- 2000 116 038
- US-A1- 2008 218 007

## Description

### Field of invention

The present invention relates to the field of reducing losses in a permanent magnet machine. More particularly, the present invention relates to a permanent magnet module for a permanent magnet machine and a method of manufacturing a permanent magnet module for a permanent magnet machine, which allows reducing eddy current losses and increase the efficiency of the permanent magnet machine.

### Art Background

An electric machine, such as an electric generator installed in a wind turbine, typically comprises a rotor which rotates relative to a stator around a rotational axis. Stator and rotor are separated from each other by an airgap, circumferentially extended around the rotational axis.

In a permanent-magnet electric machine the rotor comprises a plurality of permanent magnets, each magnet being attached to a respective baseplate interposed between the respective magnet and the rotor body. The stator typically includes a body having stator slots extending along an axial direction of the stator and an electric circuit comprising a plurality of copper windings housed in the slots. The windings of the above described electric generator or motor may be classified as concentrated or distributed.

In a concentrated winding scheme turns are wound together in series to form one multi-turn coil, which is housed in two adjacent slots. In a distributed winding scheme all the winding turns are arranged in several coils and each coil is housed in different slots, which are not adjacent to each other.

Depending on the number of slots, the windings of the above described electric machine may be classified as integral-slot or fractional-slot. If the number of slots per pole per phase is an integer, then the winding is called an integral-slot winding. If the number of slots per pole per phase is not an integer, than the winding is called a fractional-slot winding.

Combinations of the above two types of classification are possible, for example integral-slot concentrated windings (ISCWs) and fractional-slot concentrated windings (FSCWs) are both known.

In permanent-magnet electric machines, more in particular in a fractional slot concentrated winding machine, the high level of sub-harmonic in the airgap flux density leads to large amounts of eddy current losses in the rotor (magnet and baseplate and rotor house). These large losses lead to lower efficiency as well as an increase in rotor temperature which could either lead to earlier power de-rating, or/and even worst, irreversible magnet demagnetisation.

In order to reduce eddy current losses, segmentation of the permanent magnets is typically used. According to the practice of magnet segmentation, a magnet element is cut axially and/or circumferentially into small magnetic pieces which then are polished on all side surfaces. Afterwards, the small magnetic pieces are glued back together in one permanent magnet unit. Magnet segmentation is relatively cheap and easy.

In addition, the baseplates can be laminated for the same purpose of reducing eddy current losses, in particular for high frequency applications (aerospace and automotive). The disadvantage of this option is the significant increase in manufacturing costs. The use of magnet baseplates is usually limited to large machines, such as industrial and large renewable energy applications, which usually use low frequencies, and therefore low losses.

The magnets and the baseplates are part of component referred to as "magnet modules". Each magnet module comprises one or more magnets are glues or fixed by other means to one or more baseplates. In each magnet module the magnet(s) is/are fixed by a metallic or non-metallic cover, non-magnetic or magnetic, welded or fixed by other means to the respective baseplate. Normally this metallic cover is made of stainless steel or any other non-magnetic material. Using this kind of cover, the mechanical airgap between stator and rotor is reduced by the thickness of the cover. The stainless-steel cover is normally not magnetically conductive, so that it does not reduce the magnetic airgap or the torque due to flux leakage. A magnetic cover could be also used, although the flux leakage will be higher, but the effective airgap will be smaller. EP 1 777 795 A2 discloses a permanent magnet machine at least a permanent magnet and a baseplate comprising a soft magnetic composite material (SMC) and a plurality of portions.

### Summary of the Invention

Scope of the present invention is to provide a magnet module for a permanent magnet machine, which may be used for reducing eddy current losses and increase the efficiency of the permanent magnet machine in a more effective and cheaper manner than the above-described prior art.

This scope is met by the subject matter according to the independent claims. Advantageous embodiments of the present invention are described by the dependent claims.

According to a first aspect of the present invention a permanent magnet module for a permanent magnet machine is provided. The permanent magnet module comprises a plurality of permanent magnets and a baseplate, the plurality of permanent magnets being fixed to the baseplate. The baseplate is made of a soft magnetic composite material and consists of a plurality of portions fixed to each other and to the permanent magnets. The portions of the baseplate are aligned along a direction subject to be disposed parallel to a circumferential direction of the permanent magnet machine with reference to a longitudinal axis of rotation of the permanent magnet machine, each portion not having the same circumferential extension as a permanent magnet to which it is fixed

According to a second aspect of the present invention a permanent magnet machine including the above-described permanent magnet support is provided. Particularly, the permanent magnet machine may be a fractional slot concentrated winding generator to be installed on a wind turbine. More in general, the present invention may be applied to any type of permanent magnet machine.

According to a third aspect of the present invention a method of manufacturing a permanent magnet module for a permanent magnet machine is provided. The method comprises the steps of:
- manufacturing a plurality of permanent magnets,
- manufacturing a baseplate made of a soft magnetic composite material and consisting of a plurality of portions fixed to each and to the permanent magnets, the baseplate being attachable to a rotor of the permanent magnet machine,
- fixing the plurality of permanent magnets to the baseplate for obtaining a permanent magnet module,
- attaching a plurality of the permanent magnet modules to a rotor of the permanent magnet machine in such way that the baseplates are aligned along a direction subject to be disposed parallel to a circumferential direction of the permanent magnet machine with reference to a longitudinal axis of rotation of the permanent magnet machine, each portion not having the same circumferential extension as a permanent magnet to which it is fixed.

"Soft magnetic composites" (SMC) are material including compacted ferromagnetic powder particles surrounded by an electrical insulating film. Soft magnetic composites are characterized by low electrical conductivity.

By using a soft magnetic composite (SMC) material for the magnet baseplate material it has been found that the eddy current losses in this component can be effectively eliminated, thus leading to a significant reduction in the total rotor losses. This leads, in a generator installed on a wind turbine, to a significant increase in the annual energy production (AEP), particularly in fractional slot concentrated winding.

According to possible embodiments of the invention, the permanent magnet module of the present invention comprises a cover for at least partially covering the permanent magnet module, the cover comprising a non-magnetic material, in particular a plastic material.

By using a non-magnetic cover, is it possible to use a less thick cover or to tailor its thickness to reduce the physical airgap or/and the thermal performance of the permanent magnet machine. With such type of cover in the permanent magnet module the airgap between stator and rotor may be limited to 0,2-0,5 mm.

According to one possible embodiment, the cover has a constant thickness.

According to another possible embodiment, the cover has a variable thickness, the cover being thicker at the edges of the magnet and thinner at the centre of the magnet. This may bring thermal advantages to the entire permanent magnet machine.

According to other possible embodiments, the cover may not be present.

The invention may permit to build baseplates of the desired dimensions, even when the dimensions of the single SMC portions are limited, due to technological constraints, for example the dimension of the tool for compacting the ferromagnetic powder particles, which are comprised in SMC material.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered as to be disclosed with this application.

### Brief Description of the Drawings

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including embodiments of the present invention.
Fig. 2 shows a frontal circumferential view of a permanent magnet module not being part of the invention.
Fig. 3 shows a frontal circumferential view of another permanent magnet module not being part of the invention.
Fig. 4 shows a frontal circumferential view of yet another permanent magnet module not being part of the invention.
Fig. 5 shows a frontal circumferential view of a permanent magnet module according to an exemplary embodiment of the present invention.
Fig. 6 shows a lateral axial view of the permanent magnet module of Figure 5.

### Detailed Description

The illustrations in the drawings are schematically. It is noted that in different figures, similar or identical elements are provided with the same reference signs.

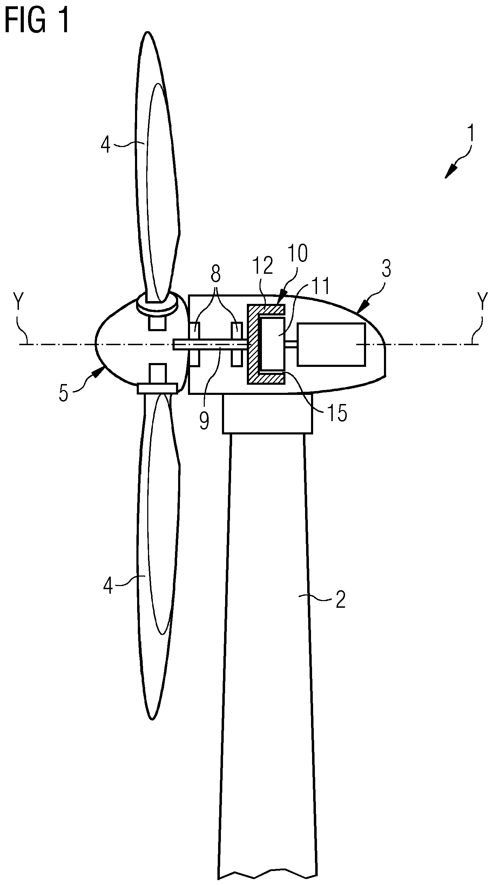

**Figure 1** shows a partial cross-sectional view of a wind turbine 1 including a permanent magnet machine 10 that is including a permanent magnet support according to the invention.

The permanent magnet machine 10 includes a stator 11 and a rotor 12. The rotor 12 is rotatable with respect to the stator 11 about a longitudinal axis of the permanent magnet machine 10.

The terms axial, radial and circumferential in the following are to be intended with reference to the longitudinal axis of rotation of the permanent magnet machine 10.

In the embodiment of Figure 1, the rotor 12 is radially external with respect the stator 11 and rotatable about the longitudinal axis Y. A circumferential air gap 15 is provided between the stator 11 and the rotor 12.

According to other possible embodiments of the present invention (not represented in the attached figures), the rotor 12 is radially internal with respect the stator 11 and rotatable about the longitudinal axis Y.

The permanent magnet machine 10 may be a fractional slot concentrated winding.

According to other possible embodiments of the present invention (not represented in the attached figures), the present invention may be applied to any type of permanent magnet electric machines, e.g. radial, axial, etc.

The present invention may be applied also to integral-slot electric permanent magnet machine.

A plurality of permanent magnets modules (not visible in Figure 1) is attached to the rotor 12 by means of respective baseplates, as detailed in the following.

According to other possible embodiments of the present invention (not represented in the attached figures), a plurality of permanent magnets modules is attached to the stator.

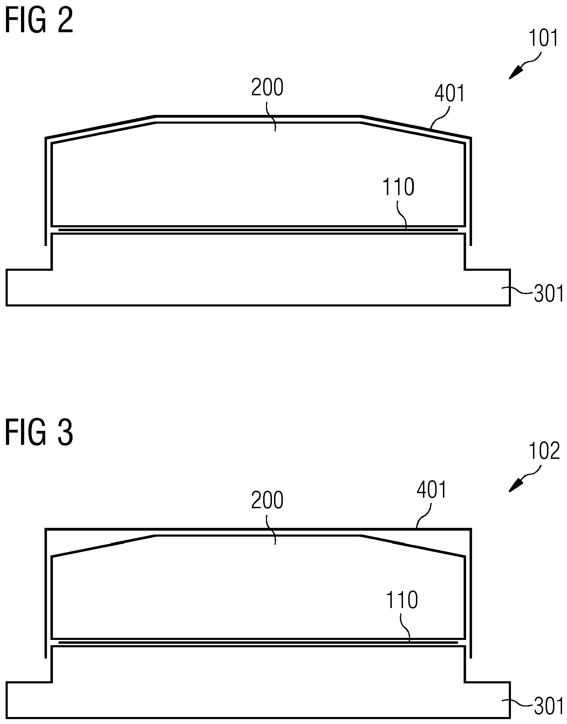

**Figure 2** shows a permanent magnet module 101 comprising a permanent magnet 200 fixed to a baseplate 301 by means of a glue layer 110.

According to other embodiments of the present invention, instead of glue any other fixing medium may be used.

The baseplate 301 comprises a soft magnetic composite (SMC) material.

The permanent magnet module 101 further comprises a cover 401 comprising a non-magnetic material, for example a plastic material.

The cover 401 may be a plastic cover or any other kind of non-magnetic material cover painted or sprayed on the permanent magnet module 101.

The same material of the cover 401 may be used for fixing the magnet 200 to the baseplate 301.

The cover 401 covers completely the magnet 200 and extends over at least a portion of the external surface of the baseplate 301, thus permitting, together with the glue layer 110, to fix the magnet 200 to the baseplate 301.

In the embodiment of figure 2 the cover 401 has a constant thickness.

**Figure 3** shows, similarly to Figure 2, a permanent magnet module 102 comprising a permanent magnet 200 fixed to a baseplate 301 by means of a glue layer 110.

The baseplate 301 comprises a soft magnetic composite (SMC) material. The permanent magnet module 102 further comprises a cover 402 comprising a non-magnetic material, for example a plastic material.

The embodiment of figure 3 differentiates itself from the embodiment of figure 2 in that the cover 402 has a variable thickness, the cover 402 being thicker at the edges of the magnet 200 and thinner at the centre of the magnet 200.

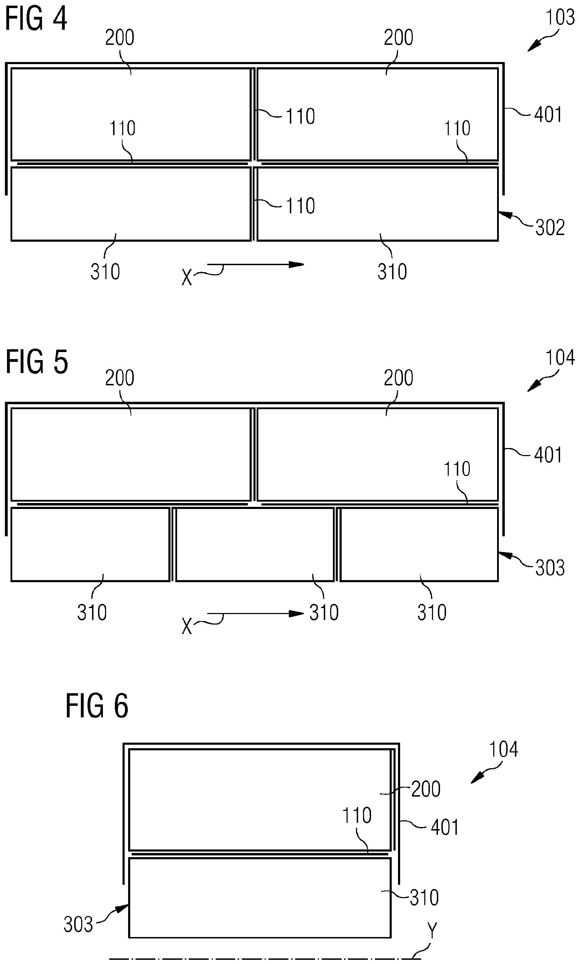

**Figure 4** shows a permanent magnet module 103 comprising a plurality of permanent magnets 200 (two magnets 200) fixed to a baseplate 302 by means of a glue layer 110. The magnets 200 are disposed aligned along a direction X parallel to a circumferential direction of the permanent magnet machine 10 and glued together. The permanent magnets 200 may be obtained through segmentation, i.e. deriving from the cutting of a magnet element into small magnetic pieces which are then glued back together in one permanent magnet unit.

According to other possible embodiments of the present invention (not represented in the attached figures), a single partially segmented permanent magnet may be used.

In the embodiment of figure 4, the baseplate 302 comprises a plurality of portions 310 fixed to each other and to the permanent magnets 200 (two portions 310, each having the same circumferential extension of a respective permanent magnet 200 to which it is fixed), for example by means of a layer of glue or of any other fixing medium.

The plurality of portions 310 of the baseplate 302 are aligned along the circumferential direction X. **Figures 5** and **6** show, similarly to Figure 4, a permanent magnet module 104 comprising a plurality of permanent magnets 200 (two magnets 200) fixed to a baseplate 303 plurality of portions 310 fixed to each other and to the permanent magnets 200, for example by means of a layer of glue or of any other fixing medium.

The embodiment of figures 5 and 6 differentiates itself from the embodiment of figure 4 in that the three portions 310 are used, which do not have the same circumferential extension of the permanent magnets 200 to which they are fixed.

According to other possible embodiments of the present invention (not represented in the attached figures), any other number of permanent magnets and portions of the baseplate may be used in a permanent magnet module according to the present invention. In particular, the permanent magnet module may also comprise, differently from the embodiment of figure 6, a plurality of portions of the baseplate aligned along the axial direction Y.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Permanent magnet module (101, 102, 103, 104) for a permanent magnet machine (10), the permanent magnet module (101, 102, 103, 104) comprising a plurality of permanent magnets (200) and a baseplate (303), the plurality of permanent magnets (200) being fixed to the baseplate (303), wherein the baseplate (303) is made of a soft magnetic composite material and consists of a plurality of portions (310) fixed to each other and to the permanent magnets (200), **characterized in that** the portions (310) of the baseplate (303) are aligned along a direction (X) subject to be disposed parallel to a circumferential direction of the permanent magnet machine (10) with reference to a longitudinal axis (Y) of rotation of the permanent magnet machine (10), each portion (310) not having the same circumferential extension as a permanent magnet (200) to which it is fixed.

2. Permanent magnet module (101, 102, 103, 104) according to claim 1, comprising a cover (401, 402) for at least partially covering the permanent magnet module (101, 102, 103, 104), the cover (401, 402) comprising a non-magnetic material.

3. Permanent magnet module (101, 102, 103, 104) according to claim 2, wherein the cover (401, 402) comprises a plastic material.

4. Permanent magnet module (101, 102, 103, 104) according to claim 2 or 3, wherein the cover (401) has a constant thickness.

5. Permanent magnet module (101, 102, 103, 104) according to claim 2 or 3, wherein the cover (402) has a variable thickness, the cover (402) being thicker at the edges of the permanent magnet (200) and thinner at the centre of the permanent magnet (200).

6. Permanent magnet module (101, 102, 103, 104) according to any of the previous claims, wherein the at least one permanent magnet (200) is glued to the baseplate (301, 302, 303) .

7. Permanent magnet machine (10) including a plurality of permanent magnet modules (101, 102, 103, 104) according to any of the previous claims.

8. Permanent magnet machine (10) according to claim 7, wherein the permanent magnet machine (10) is a fractional slot concentrated winding generator.

9. Wind turbine (1) comprising an electrical generator (10) according to claim 8.

10. Method for manufacturing a permanent magnet machine (10) including a plurality of permanent magnet modules (101, 102, 103, 104) for a permanent magnet machine (10), the method comprising the steps of:
- manufacturing a plurality of permanent magnets (200),
- manufacturing a baseplate (303) made of a soft magnetic composite material and consisting of a plurality of portions (310) fixed to each and to the permanent magnets (200), the baseplate (303) being attachable to a rotor (12) of the permanent magnet machine (10),
- fixing the plurality of permanent magnets (200) to the baseplate (303) for obtaining a permanent magnet module (104),
- attaching a plurality of the permanent magnet modules (104) to a rotor (12) of the permanent magnet machine (10) in such way that the baseplates (303) are aligned along a direction (X) subject to be disposed parallel to a circumferential direction of the permanent magnet machine (10) with reference to a longitudinal axis (Y) of rotation of the permanent magnet machine (10), each portion (310) not having the same circumferential extension as a permanent magnet (200) to which it is fixed.

## Patentansprüche

1. Permanentmagnetmodul (101, 102, 103, 104) für eine Permanentmagnetmaschine (10), wobei das Permanentmagnetmodul (101, 102, 103, 104) mehrere Permanentmagnete (200) und eine Basisplatte (303) umfasst, wobei die mehreren Permanentmagnete (200) an der Basisplatte (303) befestigt sind, wobei die Basisplatte (303) aus einem weichen magnetischen Verbundmaterial hergestellt ist und aus mehreren aneinander und an den Permanentmagneten (200) befestigten Abschnitten (310) besteht, **dadurch gekennzeichnet, dass** die Abschnitte (310) der Basisplatte (303) entlang einer Richtung (X) ausgerichtet sind, wobei sie sich parallel zu einer Umfangsrichtung der Permanentmagnetmaschine (10) mit Bezug auf eine Längsachse (Y) der Drehung der Permanentmagnetmaschine (10) positionieren lassen, wobei jeder Abschnitt (310) nicht die gleiche Umfangserstreckung wie ein Permanentmagnet (200), an dem er befestigt ist, aufweist.

2. Permanentmagnetmodul (101, 102, 103, 104) nach Anspruch 1, das eine Abdeckung (401, 402), um das Permanentmagnetmodul (101, 102, 103, 104) mindestens zum Teil abzudecken, umfasst, wobei die Abdeckung (401, 402) ein nichtmagnetisches Material umfasst.

3. Permanentmagnetmodul (101, 102, 103, 104) nach Anspruch 2, wobei die Abdeckung (401, 402) ein Kunststoffmaterial umfasst.

4. Permanentmagnetmodul (101, 102, 103, 104) nach Anspruch 2 oder 3, wobei die Abdeckung (401) eine konstante Dicke aufweist.

5. Permanentmagnetmodul (101, 102, 103, 104) nach Anspruch 2 oder 3, wobei die Abdeckung (402) eine variable Dicke aufweist, wobei die Abdeckung (402) an den Kanten des Permanentmagnets (200) dicker und in der Mitte des Permanentmagnets (200) dünner ist.

6. Permanentmagnetmodul (101, 102, 103, 104) nach einem der vorherigen Ansprüche, wobei der mindestens eine Permanentmagnet (200) auf die Basisplatte (301, 302, 303) geklebt ist.

7. Permanentmagnetmaschine (10), die mehrere Permanentmagnetmodule (101, 102, 103, 104) nach einem der vorherigen Ansprüche enthält.

8. Permanentmagnetmaschine (10) nach Anspruch 7, wobei die Permanentmagnetmaschine (10) ein Generator mit konzentrierten Bruchlochwicklungen ist.

9. Windturbine (1), die einen Stromgenerator (10) nach Anspruch 8 umfasst.

10. Verfahren zum Fertigen einer Permanentmagnetmaschine (10), die mehrere Permanentmagnetmodule (101, 102, 103, 104) für eine Permanentmagnetmaschine (10) enthält, wobei das Verfahren die folgenden Schritte umfasst:
- Fertigen mehrerer Permanentmagnete (200),
- Fertigen einer Basisplatte (303), die aus einem weichen magnetischen Verbundmaterial hergestellt ist und aus mehreren aneinander und an den Permanentmagneten (200) befestigten Abschnitten (310) besteht, wobei die Basisplatte (303) an einem Rotor (12) der Permanentmagnetmaschine (10) anfügbar ist,
- Befestigen der mehreren Permanentmagnete (200) an der Basisplatte (303), um ein Permanentmagnetmodul (104) zu erhalten,
- Anfügen mehrerer der Permanentmagnetmodule (104) an einem Rotor (12) der Permanentmagnetmaschine (10), sodass die Basisplatten (303) entlang einer Richtung (X) ausgerichtet sind, wobei sie sich parallel zu einer Umfangsrichtung der Permanentmagnetmaschine (10) mit Bezug auf eine Längsachse (Y) der Drehung der Permanentmagnetmaschine (10) positionieren lassen, wobei jeder Abschnitt (310) nicht die gleiche Umfangserstreckung wie ein Permanentmagnet (200), an dem er befestigt ist, aufweist.

## Revendications

1. Module à aimant permanent (101, 102, 103, 104) destiné à une machine à aimant permanent (10), le module à aimant permanent (101, 102, 103, 104) comprenant une pluralité d'aimants permanents (200) et une plaque de base (303), la pluralité d'aimants permanents (200) étant fixés à la plaque de base (303), la plaque de base (303) étant constituée d'un matériau composite magnétique mou et consistant d'une pluralité de parties (310) fixées les unes aux autres et aux aimants permanents (200), **caractérisé en ce que** les parties (310) de la plaque de base (303) sont alignées le long d'une direction (X) sujette à être disposée parallèlement à une direction circonférentielle de la machine à aimant permanent (10) en référence à un axe longitudinal (Y) de rotation de la machine à aimant permanent (10), chaque partie (310) ne présentant pas la même extension circonférentielle qu'un aimant permanent (200) auquel elle est fixée.

2. Module à aimant permanent (101, 102, 103, 104) selon la revendication 1, comprenant un couvercle (401, 402) destiné à couvrir au moins partiellement le module à aimant permanent (101, 102, 103, 104), le couvercle (401, 402) comprenant un matériau non magnétique.

3. Module à aimant permanent (101, 102, 103, 104) selon la revendication 2, dans lequel le couvercle (401, 402) comprend un matériau plastique.

4. Module à aimant permanent (101, 102, 103, 104) selon la revendication 2 ou 3, dans lequel le couvercle (401) possède une épaisseur constante.

5. Module à aimant permanent (101, 102, 103, 104) selon la revendication 2 ou 3, dans lequel le couvercle (402) possède une épaisseur variable, le couvercle (402) étant plus épais au niveau des bords de l'aimant permanent (200) et plus mince au niveau du centre de l'aimant permanent (200).

6. Module à aimant permanent (101, 102, 103, 104) selon l'une quelconque des revendications précédentes, dans lequel le au moins un aimant permanent (200) est collé à la plaque de base (301, 302, 303).

7. Machine à aimant permanent (10) comprenant une pluralité de modules à aimant permanent (101, 102, 103, 104) selon l'une quelconque des revendications précédentes.

8. Machine à aimant permanent (10) selon la revendication 7, dans laquelle la machine à aimant permanent (10) est un générateur d'enroulements concentrés à nombre fractionnaire d'encoches.

9. Éolienne (1) comprenant un générateur électrique (10) selon la revendication 8.

10. Procédé de fabrication d'une machine à aimant permanent (10) comprenant une pluralité de modules à aimant permanent (101, 102, 103, 104) destinés à une machine à aimant permanent (10), le procédé comprenant les étapes suivantes :
- la fabrication d'une pluralité d'aimants permanents (200),
- la fabrication d'une plaque de base (303) constituée d'un matériau composite magnétique mou et consistant d'une pluralité de parties (310) fixées les unes aux autres et aux aimants permanents (200), la plaque de base (303) pouvant être rattachée à un rotor (12) de la machine à aimant permanent (10),
- la fixation de la pluralité d'aimants permanents (200) à la plaque de base (303) de façon à obtenir un module à aimant permanent (104),
- le rattachement d'une pluralité des modules à aimant permanent (104) à un rotor (12) de la machine à aimant permanent (10) de sorte que les plaques de base (303) soient alignées le long d'une direction (X) sujette à être disposée parallèlement à une direction circonférentielle de la machine à aimant permanent (10) en référence à un axe longitudinal (Y) de rotation de la machine à aimant permanent (10), chaque partie (310) ne présentant pas la même extension circonférentielle qu'un aimant permanent (200) auquel elle est fixée.
